# EUROPEAN PATENT SPECIFICATION

(11) **EP 1 571 787 B1**
(45) Date of publication and mention of the grant of the patent: **18.10.2006**
(21) Application number: 05251225.8
(22) Date of filing: 01.03.2005
(51) Int. Cl.: H04L 12/28

(54) **Apparatus and method for reporting operation state of digital rights management**
Apparat und Methode für das Berichten über Betriebszustand des digitalen Rechtmanagements
Matériel et méthode pour rapporter l'état d'opération de gestion numérique de droites

(30) Priority: 02.03.2004 US 548888 P; 02.04.2004 KR 2004022882
(43) Date of publication of application: 07.09.2005
(73) Proprietor: SAMSUNG ELECTRONICS CO., LTD., Suwon-si, Gyeonggi-do (KR)
(72) Inventor: Choi, Yang-lim, Bundang-gu Seongnam-si Gyeonggi-do (KR); Cho, Jung-yon, Seoul (KR); Sohn, Young-chul, Suwon-si Gyeonggi-do (KR)
(74) Representative: Robinson, Ian Michael

(56) References cited:
- WO-A-20/04017664
- DE-A1- 10 254 747
- KYUNG-AH CHANG ET AL: "Multimedia rights management for the multiple devices of end-user" MULTIMEDIA SIGNAL PROCESSING, 2002 IEEE WORKSHOP ON 9-11 DEC. 2002, PISCATAWAY, NJ, USA,IEEE, 19 May 2003 (2003-05-19), pages 640-645, XP010642443 ISBN: 0-7803-7713-3
- WALKER J ET AL: "Share it! - the architecture of a rights-managed network of peer-to-peer set-top-boxes" EUROCON 2003. COMPUTER AS A TOOL. THE IEEE REGION 8 22-24 SEPT. 2003, PISCATAWAY, NJ, USA,IEEE, vol. 1, 22 September 2003 (2003-09-22), pages 251-255, XP010671321 ISBN: 0-7803-7763-X

## Description

The present invention relates to digital rights management (DRM), and more particularly, to an apparatus and method for reporting the operation state of digital rights management of a control device, to a control point in a home network.

Home networking has been attracting increasingly more attention recently. A home network is formed with devices reproducing contents (movie, song, video game software) and devices for managing the contents reproducing devices, and is a network in which digital rights management is guaranteed by these devices.

Digital rights management includes a function for managing rights on devices belonging to a home network, and a function for managing rights on contents reproducible in a predetermined home network. Digital rights management is performed by an application program installed in a device belonging to a home network. Among digital rights management application programs being currently used, there are SmartRight suggested by Thomson, Open Conditional Content Access Management (OCCAM) suggested by Cisco Systems, xCP (extensible content protection) Cluster Protocol suggested by IBM, and Digital Transmission Content Protection (DTCP) suggested by Digital Transmission License Administrator (DTLA).

In an ordinary digital rights management system, devices belonging to a home network are broken down into master devices and slave devices. A master device is a device that performs grant, change or revocation of digital rights on other devices and setting, change, and revocation of digital rights on contents existing in the home network. A slave device is a device which provides or reproduces contents according to digital rights granted by the master device. The slave devices are divided into media renderers that decode and reproduce contents and media sources that provide contents to the media renderers. Whether a device is a master device or a slave device is determined by the function performed by a DRM application program.

Meanwhile, in the recent home network systems, a universal plug and play (uPnP) protocol is used for communications between these master device and slave devices. The uPnP is a technology by which connection to and disconnection from a home network of a device forming the home network are automatically recognized such that the status as an element of the home network is automatically granted or revocated.

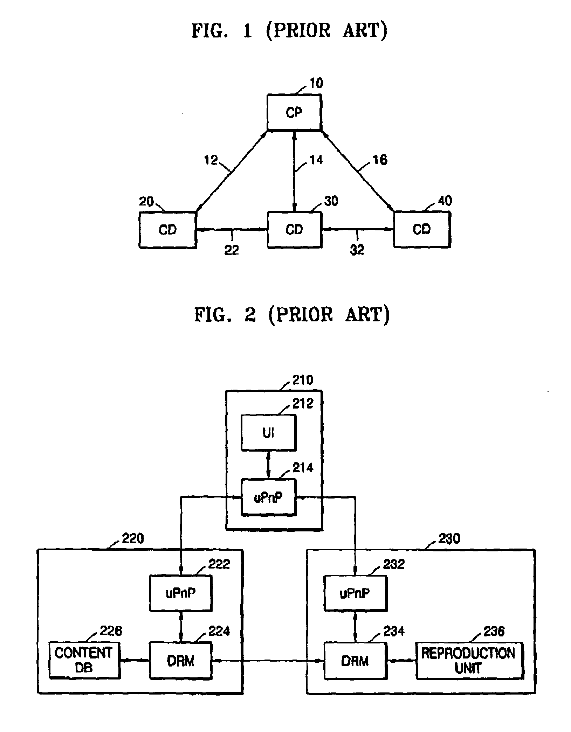

Figure 1 is a diagram showing a home network according to a uPnP protocol.

The home network according to the uPnP protocol comprises control device (CDs) and a control point (CP).

The CP 10 searches for CDs 20, 30 and 40 on the network, and by receiving advertisement messages generated when a device is newly connected to or disconnected from the home network, recognizes that the CD is newly connected to the home network. Also, the CP 10 receives the description message of each CD and event messages according to actions with CDs. Each action is defined by a markup language, for example, extensible markup language (XML).

When connected to or disconnected from the home network, one of the CDs 20, 30, and 40 sends an advertisement message to the CP 10 and sends a message confirming whether or not the CD is existing in the home network within a predetermined period. Also, the CDs 20, 30, and 40 respond to a variety of requests transmitted by the CP 10 according to the uPnP protocol. The CDs 20, 30, and 40 may be any one of a media source and a media renderer in the home network. In Figure 1, paths 12, 14, 16 indicate message transmission and response performed between the CP 10 and CDs 20, 30, and 40, and paths 22, 32 indicate transmission and reception of contents between CDs 20, 30 and 40.

Figure 2 is a diagram showing a structure in which contents transmission occurring between a CP and CDs is performed in digital rights management (DRM) using the uPnP.

The CP 210 comprises a uPnP module 212 which transmits messages to and receives responses to the messages from CDs according to the uPnP protocol, and a user interface 214 which receives a user input for message transmission and outputs results of message responses to the user. Generally, the CP 210 is a remote control device or a personal digital assistant (PDA), and has a display screen. In the aspect of contents reproduction, the CP 210 transfers contents search and reproduction commands from the user, to CDs according to the uPnP protocol and receives responses to the commands from CDs.

CDs are divided into media renderers and media sources according to whether the device is reproducing or providing contents.

The media source 220 comprises a uPnP module 222 which informs the CP 210 of its presence through an advertisement message by communicating with the uPnP module 212 of the CP 210, a DRM module 224 which performs digital rights management and provides contents to authorized CDs; and a contents DB 226 which stores contents.

The media renderer 230 comprises a uPnP module 232 which informs the CP 210 of its presence through an advertisement message by communicating with the uPnP module 212 of the CP 210; a DRM module 234, which performs digital rights management and receives authorized contents from a media source; and a contents reproduction unit 236 which decodes and reproduces received contents.

However, as shown in Figure 2, while directly communicating with each other, the DRM module 224 of the media source 220 and the DRM module 234 of the media renderer 230 perform digital rights management. Accordingly, the CP 210 only recognizes error messages generating under the uPnP protocol. That is, the CP cannot know which operation of the DRM process the media source 220 or the media renderer 230 is performing, or whether or not the process being performed is successful.

In the conventional implementation as in Figure 2, there is the problem that the user cannot recognize the operation state of the DRM module. It is because communication between the CP and the CDs is performed through the uPnP module, but communication between the media source and the media renderer is performed directly through the DRM module. This problem causes an additional problem in that the user cannot smoothly deal with errors occurring during the DRM process.

WO 2004/017664 discloses a digital rights management (DRM) agent implemented in a tamper-resistant identity module adapted for engagement with a client system, such as a mobile phone or a computer system. The DRM agent is implemented with functionality for enabling usage, such as rendering or execution, of protected digital content provided to the client system from a content provider. This document forms the pre-characterising portion of the claims appended hereto.

Illustrative, non-limiting embodiments of the present invention aim to address and overcome the above disadvantages and other disadvantages not described above. However, the present invention is not required to overcome the disadvantages described above, and an illustrative, non- limiting embodiment of the present invention may not overcome any of the problems described above.

According to the present invention there is provided an apparatus and method as set forth in the appended claims. Preferred features of the invention will be apparent from the dependent claims, and the description which follows.

Generally, the present invention provides a method for reporting the operation state of digital rights management (DRM), by which a user can recognize the operation state of the DRM process in a DRM system using a universal plug and play (uPnP) protocol.

According to an aspect of the present invention, there is provided an apparatus for reporting an operation state of digital rights management DRM of a control device to a control point in a home network formed with the at least one control device and the control point, the apparatus comprising: a DRM module which performs DRM; characterised by: a state variable generation unit arranged to receive DRM operation state information indicating the state of a DRM process currently operating, from the DRM module, and generate DRM state variables based on the received DRM state information; and a universal plug and play uPnP module which, by using a uPnP protocol, is arranged to transmit the state variables generated by the state variable generation unit to the control point.

The DRM state information may indicate any one of authentication beginning, authenticating, authentication failure, and authentication success by the DRM module. Also, the DRM state information may indicate any one of key processing, key processing failure, and key processing success by the DRM module.

At this time, when the control device is a media source, the DRM state information may be generated whenever contents in the media source are output to another control device, and when the control device is a media renderer, the DRM state information may be generated whenever contents in the media renderer are input to the media renderer or are rendered.

The state variable generation unit may generate: a not-authenticated state variable which indicates that the control device including the DRM module is turned on; a normal-operation state variable which indicates that the DRM module is normally operating; an authenticating state variable which indicates that an authentication operation by the DRM module is performed; and an authentication-failed state variable which indicates that the result of the authentication by the DRM module is a failure.

The state variable generation unit may further generate: a normal-operation state variable which indicates that the DRM module is normally operating; a key-processing state variable which indicates that a key processing operation by the DRM module is performed; and a key-processing-failure state variable which indicates that the key-processing operation by the DRM module is a failure.

The apparatus may further include a state variable storage unit which stores the state variables, in which, in response to a state variable search request of the control point, the uPnP module searches for a state variable stored in the state variable storage unit according to a uPnP protocol, and transmits the state variable to the control point.

According to another aspect of the present invention, there is provided a method for reporting the operation state of digital rights management DRM of a control device to a control point in a home network formed with the control device and the control point, the method comprising: performing DRM; characterised by: generating DRM state information determining a current DRM operation currently operating; generating a DRM state variable based on the DRM state information; and transmitting the generated DRM state variable to the control point (360) by using a universal plug and play (uPnP) protocol.

The above and other aspects of the present invention will become more apparent by describing in detail exemplary embodiments thereof with reference to the attached drawings in which:
Figure 1 is a diagram showing a home network according to a universal play and plug (uPnP) protocol;
Figure 2 is a diagram showing a structure in which contents transmission occurring between a control point (CP) and a control device (CD) is performed in digital rights management (DRM) using the uPnP;
Figure 3 is a diagram showing the internal structures of a CP and a CD according to an exemplary embodiment of the present invention;
Figure 4 is a diagram showing the transition of state variables according to an exemplary embodiment of the present invention;
Figure 5 is a diagram showing the transition of state variables according to another exemplary embodiment of the present invention;
Figure 6 is a diagram showing the transition of state variables according to still another exemplary embodiment of the present invention; and
Figure 7 is a diagram showing a method for reporting a rights revocation state variable to a CP according to an exemplary embodiment of the present invention.

The present invention will now be described more fully with reference to the accompanying drawings, in which exemplary embodiments of the invention are shown.

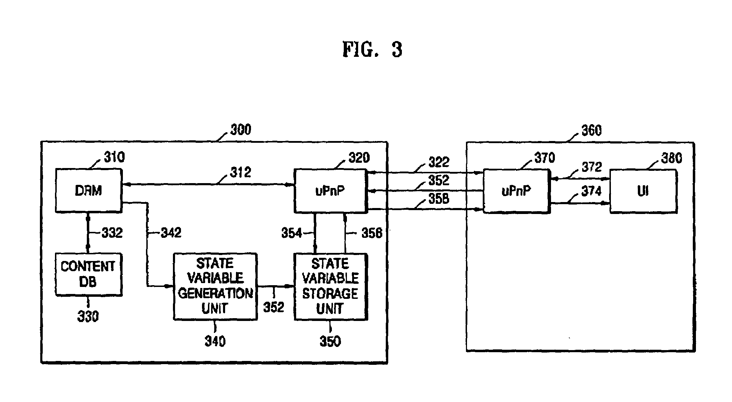

Referring to the diagram of Figure 3 showing the internal structures of a CD and a CP, the CD 300 according to an exemplary embodiment of the present invention includes a DRM module 310, a uPnP module 320, a contents DB 330, a state variable generation unit 340, and a state variable storage unit 350. The CD 300 of Figure 3 is a media source.

The DRM module 310 performs digital rights management of the CD 300 in the home network to which the DRM 310 belongs. Digital rights management includes i) device rights management, ii) contents rights management, and iii) rights revocation management.

The device rights management means a series of operations, including i) grant, change, and revocation of qualification of devices belonging to the home network, ii) generation, change, and termination of a domain key obtainable only by the devices belonging to the home network, and iii) confirmation of the qualification of home network devices by using the domain key.

The contents rights management means a series of operations, including i) generation, change and termination of copy control information such as the allowed frequency or permission of copying or reproduction of predetermined contents, and ii) generation of a content key used for encryption of predetermined contents.

Rights revocation management means operations, including determining whether or not devices are illegally copied, and revoking digital rights of all devices that have the same identifier as the identifier determining an illegally copied device,

Rights revocation is performed by using a revocation list including the identifier of an illegally copied device, and additionally by using technologies of certificates or electronic signatures.

Paths 312, 322, 332, and 372 of Figure 3 show uPnP communication paths for performing an operation to transfer contents from the CD 300 to another device by a user input through the CP 360.

The DRM module 310 is determined by a digital rights management solution used by the DRM module 310. Among digital rights management solutions, there are SmartRight suggested by Thomson, Open Conditional Content Access Management (OCCAM) suggested by Cisco Systems, xCP (extensible content protection) Cluster Protocol suggested by IBM, and Digital Transmission Content Protection (DTCP) suggested by Digital Transmission License Administrator (DTLA) .

In addition to these digital rights management application programs, the DRM module in the present invention indicates all solutions performing i) device rights management, ii) contents rights management, and iii) rights revocation management. The DRM can be implemented by hardware as well as by application programs.

The uPnP module 320 automatically detects connection to and disconnection from the home network of the device according to the uPnP protocol, automatically updates information on all connected devices, and performs request and response actions between the CD 300, such as a media source and a media renderer, and the CP 360.

Paths 342, 352, 354, 356, 358, and 374 of Figure 3 indicate paths for performing generation and report of DRM state variables.

The state variable generation unit 340 receives DRM state information 342 from the DRM module 310, and by using the received DRM state information 342, generates a state variable 352. The DRM state information varies according to the type of the DRM solution used by the DRM module. Since all DRM solutions generally include an authentication operation, a key processing operation, and a revocation operation, the DRM state information includes information on whether or not an authentication operation by the DRM module has begun, whether authentication has succeeded or failed, whether or not the key processing operation has begun, and whether the key processing operation has failed or succeeded.

The state variable storage unit 350 stores operation state variables. The uPnP module 370 of the CP 360 transmits a state variable request to the uPnP module 320 of the CD 300 at a predetermined time or period. The uPnP module 320 of the CD 300 receiving the state variable request 352 extracts a current state variable stored in the state variable storage unit 350, and then transmits a response 358 containing the current state variable to the uPnP module 370 of the CP 360. The transmitted current state variable 374 is displayed through the UI 380 to the user.

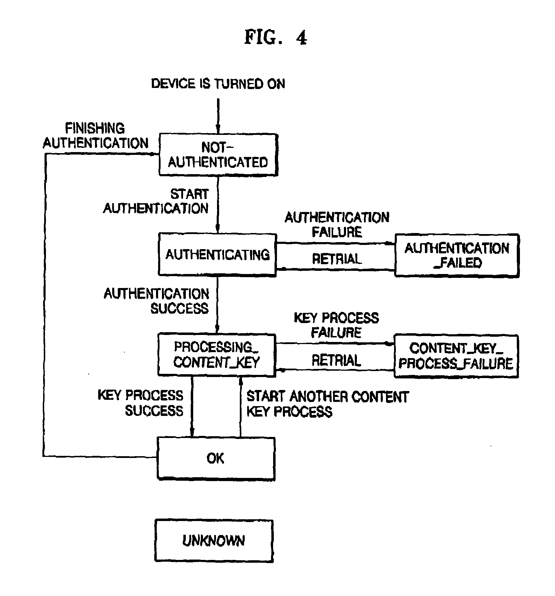

Referring to Figures 4 through 7, the transition process of state variables according to each DRM solution will now be explained.

Figure 4 is a diagram showing the structure of transition of state variables according to an exemplary embodiment of the present invention.

Operation state variables of Figure 4 includes Not_authenticated, Authenticating, Authentication_failed, Processing_content_key, Content_key_process_failure, Normal_operation (OK), and Unknown.

In Figure 4, each arrow indicates DRM state information 342 generated by the DRM module 310 according to the operation state of the DRM module 310, and each block indicates an operation state variable 352.

When the CD 300 is turned on, the DRM module 310 is initialized. The state variable generation unit 340 receives completion of initialization of the DRM module 310 as DRM state information, generates a 'Not_authenticated' state variable, and stores it in the state variable storage unit 350.

A reproduction command for a predetermined content by the user is input through the UI 380, and transferred to the DRM module (310) 310 through the uPnP module 370 of the CP 360 and the uPnP module 320 of the CD 300, and then the DRM module 310 performs authentication between the CP 360 and the CD 300 according to a predetermined DRM solution.

If this authentication operation begins, the DRM module 310 generates DRM state information 342 indicating the beginning of authentication, and transmits to the state variable generation unit 340. The state variable generation unit 340 receives the DRM state information 342 indicating the beginning of authentication, and then makes the state variable in the state variable storage unit 350 transition from 'Not_authenticated' to 'Authenticating'. The transition operation of the state variable means an operation updating a state variable stored in the state variable storage unit 350 with another state variable.

In the same manner, the DRM module 310 generates DRM state information according to an operation being performed by the DRM module 310 itself, and the state variable generation unit 340 receives DRM state information from the DRM module 310, and then, according to the structure shown in FIGURE 4, the state variable in the state variable storage unit 350 is updated by the state variable corresponding to a block indicated by each DRM state information.

In Figure 4, a 'Normal_operation (OK)' state variable indicates the successful completion of the key processing operation as well as that of the authentication operation.

An 'Unknown' state variable indicates a state variable generated by the state variable generation unit when the DRM state information 342 is not any other type of the DRM state information shown in Figure 4.

The DRM state variable structure when the DRM solution is digital transmission content protection (DTCP) is shown in FIGURE 4. According to DTCP, authentication for a CD is performed for respective contents. Accordingly, with respect to DTCP, if an authentication operation for a device is completed, a 'Key_processing' state variable is immediately generated without generating other additional state variables.

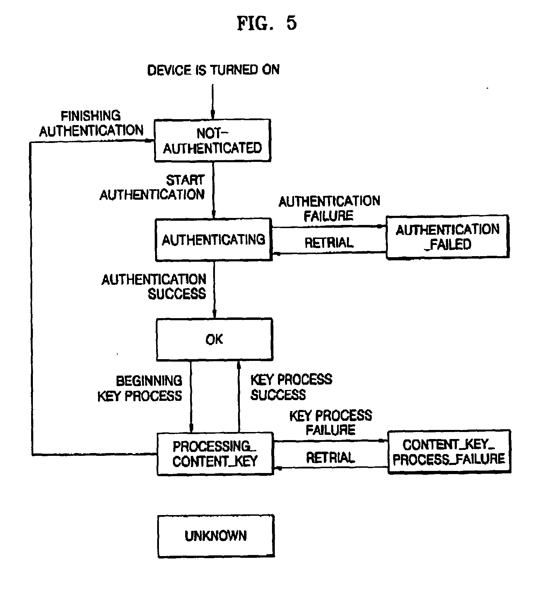

Figure 5 is a diagram showing the structure of transition of state variables according to another exemplary embodiment of the present invention.

The state transition structure of Figure 5 shows a case where the authentication operation and the key processing operation by the DRM module (310) 310 are separated.

That is, if DRM state information indicating authentication success is received by the state variable generation unit 340 during 'Authenticating' state, the state variable is changed to 'Normal_operation (OK)'. In other words, even when an authentication operation is successfully completed, the state variable is updated with 'Normal_operation (OK)' unlike Figure 4. Accordingly, unless a reproduction command of predetermined contents by a user input is input, 'Normal_operation (OK)' is maintained till DRM state information 342 indicating completion of authentication is received by the state variable generation unit 340.

Therefore, the state transition structure of Figure 5 is appropriate to a DRM solution of the DRM module 310 in which an authentication operation is performed separately from a key processing operation; that is, an authentication operation is performed for a predetermined device while key processing is performed for contents separately from the device.

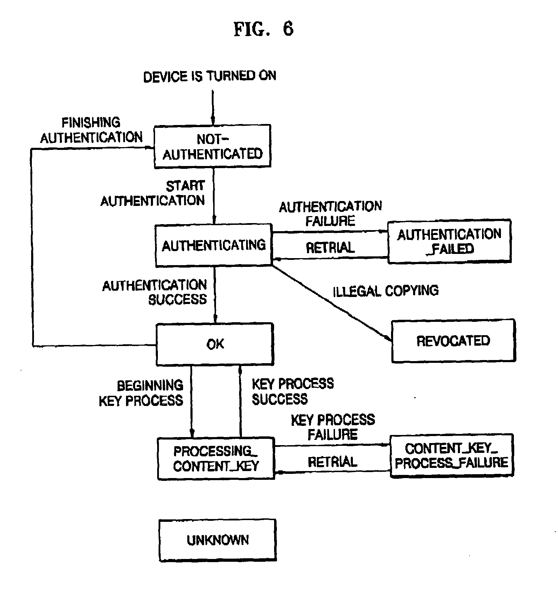

Figure 6 is a diagram showing the structure of transition of state variables according to still another exemplary embodiment of the present invention.

The state transition structure of Figure 6 is the same as that of Figure 5 except for the 'Revocated' state variable. The 'Revocated' state variable is generated when it is determined during an authentication operation for a device, that a device is illegally copied. Accordingly, the state transition structure of Figure 6 is appropriate when the DRM solution of the DRM module 310 performs a revocation function.

In another embodiment of the present invention, unlike as shown in Figure 3, a 'Revocated' state variable may be transferred to the CP, not by a response to a state variable request, but by other methods. This will now be explained.

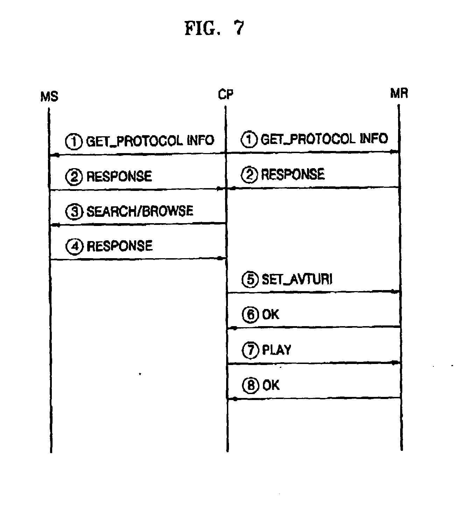

Figure 7 is a diagram showing a method for reporting a rights revocation state variable to a CP according to an exemplary embodiment of the present invention.

In the embodiment of Figure 7, a 'Revocated' state variable is transferred from the CD to the CP through 'get_protocol Info' that is one of uPnP actions.

First, in operation ①, the CP transfers get_protocol Info command to the CD according to the uPnP protocol. The CD includes both a media source (MS) and a media renderer (MR). The transfer of get_protocol Info command is performed between the uPnP module of the CP and the uPnP module of the CD.

In operation ②, each CD, that is, the media source (MS) and the media renderer (MR), transfers a response to the get_protocol Info command, to the CP. This response contains 'Revocated' state variable indicating whether or not the media source or the media renderer is illegally copied. The 'Revocated' state variable is generated by the state variable generation unit of the CD.

In operation ③, the CP transmits a command to search and browse predetermined contents, to the media source, and in operation ④, the media source, as a response to the command, transmits contents information containing an identifier indicating predetermined contents.

In operations ⑤ through ⑧, addressing and reproduction commands for the corresponding contents are performed between the CP and the media renderer such that reproduction of the contents is performed.

In operations ⑤ and ⑥, the media renderer (MR) receives the media source storing the contents and the location of the contents through SET_AVTURI command from the CP, and in operations ⑦ and ⑧, receives the corresponding contents from the media source (MS) through Play command from the CP, and reproduces the contents.

In Figure 7, operations ① and ② may be performed after operations ③ and ④. In this case, after searching and browsing predetermined contents are performed, get_protocol Info command is transmitted from the CP to the CD.

Meanwhile, the method for reporting the operation state of digital rights management according to the present invention can be written as computer programs. Codes and code segments forming the program can be easily inferred by a computer programmer in the field of the present invention. Also, the program implements reporting the state of digital rights management by being stored in computer readable media, read and executed by a computer. The computer readable media include magnetic storage media, optical recording media, and carrier wave media.

According to the present invention as described above, the control point having a user interface in a home network is made to allow the operation state of digital rights management, which is performed by the control device, to be displayed to the user such that the user can smoothly deal with error states of the home network.

Although a few preferred embodiments have been shown and described, it will be appreciated by those skilled in the art that various changes and modifications might be made without departing from the scope of the invention, as defined in the appended claims.

All of the features disclosed in this specification (including any accompanying claims, desription and drawings), and/or all of the steps of any method or process so disclosed, may be combined in any combination, except combinations where at least some of such features and/or steps are mutually exclusive.

Each feature disclosed in this specification (including any accompanying claims, description and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, description and drawings), or to any novel one, or any novel combination, of the steps of any method or process so disclosed.

## Claims

1. An apparatus for reporting an operation state of digital rights management DRM of a control device (300) to a control point (360) in a home network formed with the at least one control device (300) and the control point (360), the apparatus comprising:
a DRM module (310) which performs DRM;
**characterised by**:
a state variable generation unit (340) arranged to receive DRM operation state information indicating the state of a DRM process currently operating, from the DRM module (310), and generate DRM state variables based on the received DRM state information; and
a universal plug and play uPnP module (320) which, by using a uPnP protocol, is arranged to transmit the state variables generated by the state variable generation unit (340) to the control point (360).

2. The apparatus of claim 1, wherein the DRM state information indicates at least one of authentication beginning, authenticating, authentication failure, and authentication success by the DRM module (310).

3. The apparatus of claim 1 or 2, wherein the DRM state information indicates at least one of key processing, key processing failure, and key processing success by the DRM module (310).

4. The apparatus of claim 2, wherein if the control device (300) is a media source, the state variable generation unit (340) is arranged to generate the DRM state information if contents in the media source are output to another control device (300), and if the control device (300) is a media renderer, the state variable generation unit (340) is arranged to generate the DRM state information if contents in the media renderer are input to the media renderer or are rendered.

5. The apparatus of any preceding claim, wherein the universal plug and play uPnP module (320) is arranged to transmit the DRM state information to the control point (360) by using a uPnP protocol.

6. The apparatus of claim 5, wherein the DRM state information indicates whether rights of a home network device to which the DRM module (310) is installed is revocated.

7. The apparatus of any preceding claim, wherein the state variable generation unit (340) is arranged to generate:
a not-authenticated state variable which indicates that the at least one control device (300) including the DRM module (310) is turned on;
a normal-operation state variable which indicates that the DRM module (310) is normally operating;
an authenticating state variable which indicates that an authentication operation by the DRM module (310) is performed; and
an authentication-failed state variable which indicates that a result of the authentication by the DRM module (310) is a failure.

8. The apparatus of claim 7, wherein if the DRM state information indicates that the DRM module (310) has begun authentication, the state variable generation unit (340) causes the not-authenticated state variable to change to the authenticating state variable.

9. The apparatus of claim 7 or 8, wherein if the DRM state information indicates that the authentication by the DRM module (310) is successful, the state variable generation unit (340) causes the authenticating state variable to change to the normal-operation state variable, and if the DRM state information indicates that the authentication by the DRM module (310) has failed, the state variable generation unit (340) causes the authenticating state variable to change to the authentication-failed state variable.

10. The apparatus of claim 7, 8 or 9, wherein when the DRM state information indicates an authentication finishing condition of the at least one control device (300), the state variable generation unit (340) causes the normal-operation state variable to change to the not-authenticated state variable.

11. The apparatus of claim 7, 8, 9 or 10, wherein the state variable generation unit (340) is arranged to further generate:
a key-processing state variable which indicates that a key processing operation by the DRM module (310) is performed; and
a key-processing-failure state variable which indicates that the key-processing operation by the DRM module (310) is a failure.

12. The apparatus of claim 11, wherein if the DRM operation state information indicates that the authentication operation by the DRM module (310) is successful, the state variable generation unit (340) causes the authenticating state variable to change to the key-processing state variable, and if the DRM state information indicates that the authentication operation by the DRM module (310) has failed, the state variable generation unit (340) causes the key-processing state variable to change to the authentication-failed state variable.

13. The apparatus of claim 11 or 12, wherein if the DRM state information indicates that the DRM module (310) has begun key-processing, the state variable generation unit (340) causes the normal-operation state variable to change to the key-processing state variable.

14. The apparatus of claim 11, 12 or 13, wherein if the DRM state information indicates that the key-processing operation by the DRM module (310) is successful, the state variable generation unit (340) causes the key-processing state variable to change to the normal-operation state variable, and if the DRM state information indicates that the key-processing operation by the DRM module (310) has failed, the state variable generation unit (340) causes the key-processing state variable to change to the key-processing-failure state variable.

15. The apparatus of any preceding claim, further comprising:
a state variable storage unit (350) (350) which stores the state variables, wherein, in response to a state variable search request from the control point (360), the uPnP module (320) searches for a state variable stored in the state variable storage unit (350) according to a uPnP protocol, and transmits the state variable to the control point (360).

16. The apparatus of claim 15, wherein the universal plug and play uPnP module is arranged to transmit the state variable to the at least one control device (300) as a response to get_protocol Info command by the control point (360).

17. A method for reporting the operation state of digital rights management DRM of a control device (300) to a control point (360) in a home network formed with the control device (300) and the control point (360), the method comprising:
performing DRM;
**characterised by**:
generating DRM state information determining a current DRM operation currently operating;
generating a DRM state variable based on the DRM state information; and
transmitting the generated DRM state variable to the control point (360) by using a universal plug and play (uPnP) protocol.

18. The method of claim 17, wherein the generating of the DRM state information is performed while performing the DRM.

19. The method of claim 17 or 18, wherein the DRM state information indicates at least one of authentication beginning, authenticating, authentication failure, and authentication success by a DRM module (310).

20. The method of claim 19, wherein the DRM state information indicates at least one of key processing, key processing failure, and key processing success by the DRM module (310).

21. The method of claim 19 or 20, wherein if the control device (300) is a media source, the DRM state information is generated if contents in the media source are output to another control device (300), and if the control device (300) is a media renderer, the DRM state information is generated whenever contents in the media renderer are input to the media renderer or rendered.

22. The method of any of claims 17 to 21, wherein the DRM state information is transmitted to the control point (360) by using a uPnP protocol.

23. The method of claim 22, wherein the DRM state information indicates whether at least one right of a home network device to which a DRM module (310) is installed is revocated.

24. The method of any of claims 17 to 23, wherein the generating of the DRM state variable comprises generating:
a not-authenticated state variable which indicates that the control device (300) including a DRM module (310) is turned on;
a normal-operation state variable which indicates that the DRM module (310) is normally operating;
an authenticating state variable which indicates that an authentication operation by the DRM module (310) is performed; and
an authentication-failed state variable which indicates that a result of the authentication by the DRM module (310) has failed.

25. The method of claim 24, wherein if the DRM state information indicates that the DRM module (310) has begun authentication, the generating of the DRM state variable comprises making the not-authenticated state variable to change to the authenticating state variable.

26. The method of claim 24 or 25, wherein if the DRM state information indicates that the authentication by the DRM module (310) is successful, the generating the DRM state variable comprises causing the authenticating state variable to change to the normal-operation state variable, and if the DRM state information indicates that the authentication by the DRM module (310) has failed, the generating the DRM state variable comprises causing the authenticating state variable to change to the authentication-failed state variable.

27. The method of claim 24, 25 or 26 wherein when the DRM state information indicates an authentication finishing condition of the control device (300), the generating the DRM state variable comprises making the normal-operation state variable to change to the not-authenticated state variable.

28. The method of any of claims 24 to 27, wherein the generating the DRM state information further comprises generating:
a key-processing state variable which indicates that a key processing operation by the DRM module (310) is performed; and
a key-processing-failure state variable which indicates that the key-processing operation by the DRM module (310) is a failure.

29. The method of claim 28, wherein if the DRM state information indicates that the authentication operation by the DRM module (310) is successful, the generating the DRM state variable comprises causing the authenticating state variable to change to the key-processing state variable, and if the DRM state information indicates that the authentication operation by the DRM module (310) has failed, the generating the DRM state variable comprises causing the key-processing state variable to change to the authentication-failed state variable.

30. The method of claim 28 or 29, wherein when the DRM state information indicates that the DRM module (310) has begun key-processing, the generating the DRM state variable comprises making the normal-operation state variable to change to the key-processing state variable.

31. The method of claim 28, 29 or 30, wherein if the DRM state information indicates that the key-processing operation by the DRM module (310) is successful, the generating the DRM state variable comprises causing the key-processing state variable to change to the normal-operation state variable, and if the DRM state information indicates that the key-processing operation by the DRM module (310) is a failure, the generating the DRM state variable comprises causing the key-processing state variable to change to the key-processing-failure state variable.

32. The method of any of claims 17 to 31, further comprising:
storing the DRM state variable, wherein in transmitting the DRM state variable, the DRM state variable stored in the state variable storage unit (350) is transmitted to the control point (360) in response to a state variable search request by the control point (360).

33. The method of claim 32, wherein the DRM state variable is transmitted to the control point (360) in response to a get_protocol Info command from the control point (360).

## Patentansprüche

1. Vorrichtung zum Melden eines Betriebsstatus der digitalen Rechteverwaltung DRM (Digital Rights Management) eines Steuerungsgerätes (300) zu einem Steuerungspunkt (360) in einem Home-Network, das mit dem wenigstens einen Steuerungsgerät (300) und dem Steuerungspunkt (360) gebildet wird, die Vorrichtung umfasst:
ein DRM-Modul (310), das DRM durchführt,
**gekennzeichnet durch**:
eine Statusvariable-Erzeugungseinheit (340), eingerichtet, um die DRM-Betriebsstatusinformation, die den Status eines DRM-Prozesses, der aktuell in Gang ist, anzeigt, von dem DRM-Modul (310) zu empfangen und auf Basis der empfangenen DRM-Statusinformationen DRM-Statusvariablen zu erzeugen, und
ein UPnP-Modul (Universal Plug and Play module) (320), das unter Verwendung eines UPnP-Protokolls eingerichtet ist, um die **durch** die Statusvariable-Erzeugungseinheit (340) erzeugten Statusvariablen zu dem Steuerungspunkt (360) zu senden.

2. Vorrichtung nach Anspruch 1, wobei die DRM-Statusinformation wenigstens eines aus der Gruppe, die durch Authentifizierungsbeginn, Authentifizierung, Authentifizierungsfehler und Authentifizierungserfolg durch das DRM-Modul (310) gebildet wird, anzeigt.

3. Vorrichtung nach Anspruch 1 oder 2, wobei die DRM-Statusinformation wenigstens eines aus der Gruppe, die durch Schlüsselverarbeitung, Schlüsselverarbeitungsfehler und Schlüsselverarbeitungserfolg durch das DRM-Modul (310) gebildet wird, anzeigt.

4. Vorrichtung nach Anspruch 2, wobei die Statusvariable-Erzeugungseinheit (340), wenn das Steuerungsgerät (300) eine Datenträgerquelle ist, eingerichtet ist, die DRM-Statusinformation zu erzeugen, wenn Inhalte in der Datenträgerquelle zu einem anderen Steuerungsgerät (300) ausgegeben werden, und wenn das Steuerungsgerät (300) ein Datenträger-Renderer ist, die Statusvariable-Erzeugungseinheit (340) eingerichtet ist, die DRM-Statusinformationen zu erzeugen, wenn Inhalte in dem Datenträger-Renderer in den Datenträger-Renderer eingegeben oder Rendern ausgesetzt wurden.

5. Vorrichtung nach einem der vorhergehenden Ansprüche, wobei das UPnP-Modul (320) eingerichtet ist, um die DRM-Statusinformationen unter Verwendung eines UPnP-Protokolls zu dem Steuerungspunkt (360) zu senden.

6. Vorrichtung nach Anspruch 5, wobei die DRM-Statusinformationen anzeigen, ob Rechte einer Home-Network-Vorrichtung, an die das DRM-Modul (310) angeschlossen ist, entzogen sind.

7. Vorrichtung nach einem der vorhergehenden Ansprüche, wobei die Statusvariable-Erzeugungseinheit (340) eingerichtet ist, um Folgendes zu erzeugen:
eine Statusvariable "nicht authentifiziert", die anzeigt, dass wenigstens ein Steuerungsgerät (300), das das DRM-Modul (310) enthält, eingeschaltet ist,
eine Statusvariable "Normalbetrieb", die anzeigt, dass das DRM-Modul (310) normal arbeitet,
eine Statusvariable "Authentifizierung", die anzeigt, dass durch das DRM-Modul (310) die Authentifizierungsoperation durchgeführt wird, und
eine Statusvariable "Authentifizierungsfehler", die anzeigt, dass das Ergebnis der Authentifizierung durch das DRM-Modul (310) ein Fehler ist.

8. Vorrichtung nach Anspruch 7, wobei die Statusvariable-Erzeugungseinheit (340), wenn die DRM-Statusinformation anzeigt, dass das DRM-Modul (310) die Authentifizierung begonnen hat, Änderung der Statusvariablen "nicht authentifiziert" in die Statusvariable "Authentifizierung" bewirkt.

9. Vorrichtung nach Anspruch 7 oder 8, wobei die Statusvariable-Erzeugungseinheit (340), wenn die DRM-Statusinformation anzeigt, dass die Authentifizierung durch das DRM-Modul (310) erfolgreich ist, Änderung der Statusvariablen "Authentifizierung" in die Statusvariable "Normalbetrieb" bewirkt und die Statusvariable-Erzeugungseinheit (340), wenn die DRM-Statusinformation anzeigt, dass die Authentifizierung durch das DRM-Modul (310) fehlerhaft ist, Änderung der Statusvariablen "Authentifizierung" in die Statusvariable "Authentifizierungsfehler" bewirkt.

10. Vorrichtung nach Anspruch 7, 8 oder 9, wobei die Statusvariable-Erzeugungseinheit (340), wenn die DRM-Statusinformation einen Status "Authentifizierung beendet" des wenigstens einen Steuerungsgerätes (300) anzeigt, Änderung der Statusvariablen "Normalbetrieb" in die Statusvariable "nicht authentifiziert" bewirkt.

11. Vorrichtung nach Anspruch 7, 8, 9 oder 10, wobei die Statusvariable-Erzeugungseinheit (340) eingerichtet ist, um des Weiteren Folgendes zu erzeugen:
eine Statusvariable "Schlüsselverarbeitung", die anzeigt, dass durch das DRM-Modul (310) eine Schlüsselverarbeitungsoperation durchgeführt wird,
eine Statusvariable "Schlüsselverarbeitungsfehler", die anzeigt, dass die Schlüsselverarbeitungsoperation durch das DRM-Modul (310) ein Fehler ist.

12. Vorrichtung nach Anspruch 11, wobei die Statusvariable-Erzeugungseinheit (340), wenn die DRM-Statusinformation anzeigt, dass die Authentifizierungsoperation durch das DRM-Modul (310) erfolgreich ist, Änderung der Statusvariablen "Authentifizierung" in die Statusvariable "Schlüsselverarbeitung" bewirkt und die Statusvariable-Erzeugungseinheit (340), wenn die DRM-Statusinformation anzeigt, dass die Authentifizierung durch das DRM-Modul (310) fehlerhaft ist, Änderung der Statusvariablen "Schlüsselverarbeitung" in die Statusvariable "Authentifizierungsfehler" bewirkt.

13. Vorrichtung nach Anspruch 11 oder 12, wobei die Statusvariable-Erzeugungseinheit (340), wenn die DRM-Statusinformation anzeigt, dass das DRM-Modul (310) die Schlüsselverarbeitung begonnen hat, Änderung der Statusvariablen "Normalbetrieb" in die Statusvariable "Schlüsselverarbeitung" bewirkt.

14. Vorrichtung nach Anspruch 11, 12 oder 13, wobei die Statusvariable-Erzeugungseinheit (340), wenn die DRM-Statusinformation anzeigt, dass die Schlüsselverarbeitungsoperation durch das DRM-Modul (310) erfolgreich ist, Änderung der Statusvariablen "Schlüsselverarbeitung" in die Statusvariable "Normalbetrieb" bewirkt und die Statusvariable-Erzeugungseinheit (340), wenn die DRM-Statusinformation anzeigt, dass die Schlüsselverarbeitungsoperation durch das DRM-Modul (310) fehlerhaft ist, Änderung der Statusvariablen "Schlüsselverarbeitung" in die Statusvariable "Schlüsselverarbeitungsfehler" bewirkt.

15. Vorrichtung nach einem der vorhergehenden Ansprüche, die des Weiteren umfasst:
eine Statusvariable-Speichereinheit (350), die die Statusvariablen speichert, wobei das UPnP-Modul (320) in Beantwortung einer Statusvariable-Suchanforderung von dem Steuerungspunkt (360) eine in der Statusvariable-Speichereinheit (350) gespeicherte Variable entsprechend einem UPnP-Protokoll sucht und die Statusvariable zu dem Steuerungspunkt (360) sendet.

16. Vorrichtung nach Anspruch 15, wobei das UPnP-Protokoll eingerichtet ist, um die Statusvariable als eine Antwort auf den Informationsbefehl get_protocol des Steuerungspunktes (360) zu wenigstens einem Steuerungsgerät (300) zu senden.

17. Verfahren zum Melden des Betriebszustands der digitalen Rechteverwaltung DRM eines Steuerungsgerätes (300) zu einem Steuerungspunkt (360) in einem Home-Network, das mit dem Steuerungsgerät (300) und dem Steuerungspunkt (360) gebildet wird, das Verfahren umfasst:
Durchführen von DRM,
**gekennzeichnet durch**:
Erzeugen von DRM-Statusinformation, die einen gegenwärtigen DRM-Betrieb, der aktuell in Gang ist, bestimmt,
Erzeugen einer DRM-Statusvariablen auf Basis der DRM-Statusinformation und
Senden der erzeugten DRM-Statusvariablen zu dem Steuerungspunkt (360) unter Verwendung eines UPnP-Protokolls.

18. Verfahren nach Anspruch 17, wobei das Erzeugen der DRM-Statusinformation während des Durchführens der DRM durchgeführt wird.

19. Verfahren nach Anspruch 17 oder 18, wobei die DRM-Statusinformation wenigstens eines aus der Gruppe, die durch Authentifizierungsbeginn, Authentifizierung, Authentifizierungsfehler und Authentifizierungserfolg durch das DRM-Modul (310) gebildet wird, anzeigt.

20. Verfahren nach Anspruch 19, wobei die DRM-Statusinformation wenigstens eines aus der Gruppe, die durch Schlüsselverarbeitung, Schlüsselverarbeitungsfehler und Schlüsselverarbeitungserfolg durch das DRM-Modul (310) gebildet wird, anzeigt.

21. Verfahren nach Anspruch 19 oder 20, wobei, wenn das Steuerungsgerät (300) eine Datenträgerquelle ist, die DRM-Statusinformation erzeugt wird, wenn Inhalte in der Datenträgerquelle zu einem anderen Steuerungsgerät (300) ausgegeben werden, und wenn das Steuerungsgerät (300) ein Datenträger-Renderer ist, die DRM-Statusinformation immer dann erzeugt wird, wenn Inhalte in dem Datenträger-Renderer in den Datenträger-Renderer eingegeben oder Rendern ausgesetzt wurden.

22. Verfahren nach einem der Ansprüche 17 bis 21, wobei die DRM-Statusinformation unter Verwendung eines UPnP-Protokolls zu dem Steuerungspunkt (360) gesendet wird.

23. Verfahren nach Anspruch 22, wobei die DRM-Statusinformationen anzeigen, ob wenigstens ein Recht einer Home-Network-Vorrichtung, an die das DRM-Modul (310) angeschlossen ist, entzogen ist.

24. Verfahren nach einem der Ansprüche 17 bis 23, wobei das Erzeugen der DRM-Statusvariablen das Erzeugen von Folgendem umfasst:
eine "Statusvariable nicht authentifiziert", die anzeigt, dass wenigstens ein Steuerungsgerät (300), das das DRM-Modul (310) enthält, eingeschaltet ist,
eine Statusvariable "Normalbetrieb", die anzeigt, dass das DRM-Modul (310) normal arbeitet,
eine Statusvariable "Authentifizierung", die anzeigt, dass durch das DRM-Modul (310) die Authentifizierungsoperation durchgeführt wird, und
eine Statusvariable "Authentifizierungsfehler", die anzeigt, dass das Ergebnis der Authentifizierung durch das DRM-Modul (310) fehlgeschlagen ist.

25. Verfahren nach Anspruch 24, wobei das Erzeugen der DRM-Statusvariablen, wenn die DRM-Statusinformation anzeigt, dass das DRM-Modul (310) die Authentifizierung begonnen hat, umfasst, Änderung der Statusvariablen "nicht authentifiziert" in die Statusvariable "Authentifizierung" zu bewirken.

26. Verfahren nach Anspruch 24 oder 25, wobei das Erzeugen der DRM-Statusvariablen, wenn die DRM-Statusinformation anzeigt, dass die Authentifizierung durch das DRM-Modul (310) erfolgreich ist, umfasst, Änderung der Statusvariablen "Authentifizierung" in die Statusvariable "Normalbetrieb" zu bewirken, und das Erzeugen der DRM-Statusvariablen, wenn die DRM-Statusinformation anzeigt, dass die Authentifizierung durch das DRM-Modul (310) fehlerhaft ist, umfasst, Änderung der Statusvariablen "Authentifizierung" in die Statusvariable "Authentifizierungsfehler" zu bewirken.

27. Verfahren nach Anspruch 24, 25 oder 26, wobei das Erzeugen der DRM-Statusvariablen, wenn die DRM-Statusinformation einen Zustand "Authentifizierung beendet" des Steuerungsgerätes (300) anzeigt, umfasst, Änderung der Statusvariablen "Normalbetrieb" in die Statusvariable "nicht authentifiziert" zu bewirken.

28. Verfahren nach einem der Ansprüche 24 bis 27, wobei das Erzeugen der DRM-Statusinformation des Weiteren das Erzeugen von Folgendem umfasst:
eine Statusvariable "Schlüsselverarbeitung", die anzeigt, dass durch das DRM-Modul (310) eine Schlüsselverarbeitungsoperation durchgeführt wird,
eine Statusvariable "Schlüsselverarbeitungsfehler", die anzeigt, dass die Schlüsselverarbeitungsoperation durch das DRM-Modul (310) ein Fehler ist.

29. Verfahren nach Anspruch 28, wobei das Erzeugen der DRM-Statusvariablen, wenn die DRM-Statusinformation anzeigt, dass die Schlüsselverarbeitungsoperation durch das DRM-Modul (310) erfolgreich ist, umfasst, Änderung der Statusvariablen "Authentifizierung" in die Statusvariable "Schlüsselverarbeitung" zu bewirken, und das Erzeugen der DRM-Statusinformation, wenn die DRM-Statusinformation anzeigt, dass die Schlüsselverarbeitungsoperation durch das DRM-Modul (310) ein Fehler ist, umfasst, Änderung der Statusvariablen "Schlüsselverarbeitung" in die Statusvariable "Schlüsselverarbeitungsfehler" zu bewirken.

30. Verfahren nach Anspruch 28 oder 29, wobei das Erzeugen der DRM-Statusvariablen, wenn die DRM-Statusinformation anzeigt, dass das DRM-Modul (310) die Schlüsselverarbeitung begonnen hat, umfasst, Änderung der Statusvariablen "Normalbetrieb" in die Statusvariable "Schlüsselverarbeitung" zu bewirken.

31. Verfahren nach Anspruch 28, 29 oder 30, wobei das Erzeugen der DRM-Statusvariablen, wenn die DRM-Statusinformation anzeigt, dass die Schlüsselverarbeitungsoperation durch das DRM-Modul (310) erfolgreich ist, umfasst, Änderung der Statusvariablen "Schlüsselverarbeitung" in die Statusvariable "Normalbetrieb" zu bewirken, und das Erzeugen der DRM-Statusvariablen, wenn die DRM-Statusinformation anzeigt, dass die Schlüsselverarbeitungsoperation durch das DRM-Modul (310) fehlerhaft ist, umfasst, Änderung der Statusvariablen "Schlüsselverarbeitung" in die Statusvariable "Schlüsselverarbeitungsfehler" zu bewirken.

32. Verfahren nach einem der Ansprüche 17 bis 31, das des Weiteren umfasst:
Speichern der DRM-Statusvariablen, wobei beim Senden der DRM-Statusvariablen die in der Statusvariable-Speichereinheit (350) gespeicherte DRM-Statusvariable als Antwort auf eine Statusvariable-Suchanforderung des Steuerungspunktes (360) zu dem Steuerungspunkt (360) gesendet wird.

33. Verfahren nach Anspruch 32, wobei die DRM-Statusvariable als Antwort auf einen Informationsbefehl get_protocol des Steuerungspunktes (360) zu dem Steuerungspunkt (360) gesendet wird.

## Revendications

1. Appareil destiné à rapporter l'état d'opération de gestion de droits numériques DRM d'un dispositif de contrôle (300) à un point de contrôle (360) dans un réseau domestique formé dudit au moins un dispositif de contrôle (300) et du point de contrôle (360), ledit appareil comprenant :
un module de DRM (310) qui réalise la DRM ;
**caractérisé par** :
une unité de génération de variable d'état (340) destinée à recevoir les informations de l'état d'opération DRM indiquant l'état d'un processus DRM actuellement opérant, depuis le module de DRM (310), et à générer des variables d'état DRM sur la base des informations d'état DRM reçues ; et
un module uPnP plug and play universel (320) qui, en utilisant un protocole uPnP, est agencé pour transmettre les variables d'état générées par l'unité de génération des variables d'état (340) au point de contrôle (360).

2. Appareil selon la revendication 1, dans lequel les informations d'état DRM indiquent au moins l'un du début d'authentification, authentification, défaillance d'authentification, et succès d'authentification par le module de DRM (310).

3. Appareil selon la revendication 1 ou la revendication 2, dans lequel les informations d'état DRM indiquent au moins l'un du traitement de clé, défaillance du traitement de clé, et réussite du traitement de clé par le module de DRM (310).

4. Appareil selon la revendication 2, dans lequel si le dispositif de contrôle (300) est une source de média, l'unité de génération de variable d'état (340) est agencée pour générer les informations d'état DRM si le contenu de la source de média est transmis à un autre dispositif de contrôle (300), et si le dispositif de contrôle (300) est un moteur de rendu de média, l'unité de génération de variable d'état (340) est agencée pour générer les informations d'état DRM si le contenu dans le moteur de rendu de média est entré dans le moteur de rendu de média ou est rendu.

5. Appareil selon l'une quelconque des revendications précédentes, dans lequel le module uPnP plug and play universel (320) est agencé pour transmettre les informations d'état DRM au point de contrôle (360) en utilisant un protocole uPnP.

6. Appareil selon la revendication 5, dans lequel les informations d'état DRM indiquent si les droits d'un dispositif de réseau domestique dans lequel le module de DRM (310) est installé sont révoqués.

7. Appareil selon l'une quelconque des revendications précédentes, dans lequel l'unité de génération de variable d'état (340) est agencée pour générer :
une variable d'état non authentifié qui indique que ledit au moins un dispositif de contrôle (300) comprenant le module de DRM (310) est activé ;
une variable d'état d'opération normale qui indique que le module de DRM (310) fonctionne normalement ;
une variable d'état d'authentification qui indique qu'une opération d'authentification par le module de DRM (310) est réalisée ; et
une variable d'état d'échec d'authentification qui indique qu'un résultat de l'authentification par le module de DRM (310) est un échec.

8. Appareil selon la revendication 7, dans lequel si les informations de l'état de DRM indiquent que le module de DRM (310) a commencé l'authentification, l'unité de génération de variable d'état (340) entraîne le changement de la variable d'état non authentifié en variable d'état authentifié.

9. Appareil selon la revendication 7 ou la revendication 8, dans lequel si les informations de l'état de DRM indiquent que l'authentification par le module de DRM (310) a réussi, l'unité de génération de variable d'état (340) entraîne le changement de la variable de l'état d'authentification en variable de l'état de fonctionnement normal, et si les informations de l'état de DRM indiquent que l'authentification par le module de DRM (310) a échoué, l'unité de génération de variable d'état (340) entraîne le changement de la variable de l'état d'authentification en variable de l'état d'échec d'authentification.

10. Appareil selon la revendication 7, 8 ou 9, dans lequel quand les informations de l'état de DRM indiquent une condition de fin d'authentification dudit au moins un dispositif de contrôle (300), l'unité de génération de variable d'état (340) entraîne le changement de la variable d'état de fonctionnement normal en variable d'état non authentifié.

11. Appareil selon la revendication 7, 8, 9 ou 10, dans lequel l'unité de génération de variable d'état (340) est agencée pour générer en outre :
une variable d'état de traitement de clé qui indique qu'une opération de traitement de clé par le module de DRM (310) est réalisée ; et
une variable d'état d'échec de traitement de clé qui indique que l'opération de traitement de clé par le module de DRM (310) est un échec.

12. Appareil selon la revendication 11, dans lequel si les informations de l'état d'opération du DRM indiquent que l'opération d'authentification par le module de DRM (310) est réussie, l'unité de génération de variable d'état (340) entraîne le changement de la variable de l'état d'authentification en variable de l'état de traitement de clé, et si les informations de l'état de DRM indiquent que l'opération d'authentification par le module de DRM (310) a échoué, l'unité de génération de variable d'état (340) entraîne le changement de la variable d'état de traitement de clé en variable de l'état d'échec d'authentification.

13. Appareil selon la revendication 11 ou la revendication 12, dans lequel si les informations de l'état de DRM indiquent que le module de DRM (310) a commencé le traitement de clé, l'unité de génération de variable d'état (340) entraîne le changement de la variable d'état de fonctionnement normal en variable d'état de traitement de clé.

14. Appareil selon la revendication 11, 12 ou 13, dans lequel si les informations d'état DRM indiquent que l'opération de traitement de clé par le module de DRM (310) est réussie, l'unité de génération de variable d'état (340) entraîne le changement de la variable d'état de traitement de clé en variable d'état d'opération normale, et si les informations de l'état de DRM indiquent que l'opération de traitement de clé par le module de DRM (310) a échoué, l'unité de génération de variable d'état (340) entraîne le changement de la variable de l'état de traitement de clé en variable de l'état d'échec de traitement de clé.

15. Appareil selon l'une quelconque des revendications précédentes, comprenant en outre :
une unité de stockage de variable d'état (350) qui stocke les variables d'état, dans laquelle, en réponse à une demande de recherche de variable d'état du point de contrôle (360), le module uPnP (320) recherche une variable d'état stockée dans l'unité de stockage de variable d'état (350) selon un protocole uPnP, et transmet la variable d'état au point de contrôle (360).

16. Appareil selon la revendication 15, dans lequel le module uPnP plug and play universel est agencé pour transmettre la variable d'état au dit au moins un dispositif de contrôle (300) en réponse à la commande get_protocol info par le point de contrôle (360).

17. Procédé destiné à rapporter l'état d'opération de gestion des droits numériques DRM d'un dispositif de contrôle (300) à un point de contrôle (360) dans un réseau domestique formé du dispositif de contrôle (300) et du point de contrôle (360), ledit procédé comprenant :
la réalisation de la DRM ;
**caractérisée par** :
la génération des informations de l'état de DRM déterminant une opération DRM en cours d'opération ;
la génération d'une variable d'état DRM sur la base des informations d'état DRM ; et
la transmission de la variable de l'état de DRM générée au point de contrôle (360) en utilisant un protocole plug and play (uPnP) universel.

18. Procédé selon la revendication 17, dans lequel la génération des informations de l'état de DRM est réalisée tout en effectuant la DRM.

19. Procédé selon la revendication 17 ou 18, dans lequel les informations de l'état de DRM indiquent au moins l'un du début d'authentification, authentification, défaillance d'authentification, et succès d'authentification par le module de DRM (310).

20. Procédé selon la revendication 19, dans lequel les informations de l'état de DRM indiquent au moins l'un du traitement de clé, échec de traitement de clé, et succès de traitement de clé par le module de DRM (310).

21. Procédé selon la revendication 19 ou 20, dans lequel si le dispositif de contrôle (300) est une source de média, les informations de l'état de DRM sont générées si le contenu dans la source de média est transmis à un autre dispositif de contrôle (300), et si le dispositif de contrôle (300) est un moteur de rendu de média , les informations de l'état de DRM sont générées chaque fois que le contenu dans le moteur de rendu de média est transmis au moteur de rendu de média ou rendu.

22. Procédé selon l'une quelconque des revendications 17 à 21, dans lequel les informations de l'état de DRM sont transmises au point de contrôle (360) en utilisant un protocole uPnP.

23. Procédé selon la revendication 22, dans lequel les informations de l'état de DRM indiquent si au moins un droit d'un dispositif du réseau domestique sur lequel un module de DRM (310) est installé est révoqué.

24. Procédé selon l'une quelconque des revendications 17 à 23, dans lequel la génération de la variable de l'état de DRM comprend la génération :
d'une variable d'état non authentifié qui indique que le dispositif de contrôle (300) comprenant un module de DRM (310) est activé ;
d'une variable d'état d'opération normale qui indique que le module de DRM (310) opère normalement ;
d'une variable d'état d'authentification qui indique qu'une opération d'authentification par le module de DRM (310) est réalisée ; et
d'une variable d'état d'échec d'authentification qui indique qu'un résultat de l'authentification par le module de DRM (310) a échoué.

25. Procédé selon la revendication 24, dans lequel si les informations de l'état de DRM indiquent que le module de DRM (310) a commencé l'authentification, la génération de la variable de l'état de DRM comprend le changement de la variable de l'état de non authentification en variable d'état d'authentification.

26. Procédé selon la revendication 24 ou la revendication 25, dans lequel si les informations de l'état de DRM indiquent que l'authentification par le module de DRM (310) est réussie, la génération de la variable de l'état de DRM comprend le changement de la variable de l'état d'authentification à la variable de l'état d'opération normale, et si les informations de l'état de DRM indiquent que l'authentification par le module de DRM (310) a échoué, la génération de la variable de l'état de DRM comprend le changement de la variable de l'état d'authentification à la variable de l'état d'échec d'authentification.

27. Procédé selon la revendication 24, 25 ou 26 dans lequel lorsque les informations de l'état de DRM indiquent une condition de fin d'authentification du dispositif de contrôle (300), la génération de la variable de l'état de DRM comprend le changement de la variable de l'état d'opération normale à la variable de l'état de non authentification.

28. Procédé selon l'une quelconque des revendications 24 à 27, dans lequel la génération des informations de l'état de DRM comprend en outre la génération :
d'une variable de l'état de traitement de clé qui indique qu'une opération de traitement de clé par le module de DRM (310) est réalisée ; et
d'une variable de l'état d'échec de traitement de clé qui indique que l'opération de traitement de clé par le module de DRM (310) est un échec.

29. Procédé selon la revendication 28, dans lequel si les informations de l'état de DRM indiquent que l'opération d'authentification par le module de DRM (310) est réussie, la génération de la variable de l'état de DRM comprend le changement de la variable de l'état d'authentification à la variable de l'état de traitement de clé, et si les information de l'état de DRM indiquent que l'opération d'authentification par le module de DRM (310) a échoué, la génération de la variable de l'état de DRM comprend le changement de la variable de l'état de traitement de clé à la variable de l'état d'échec d'authentification.

30. Procédé selon la revendication 28 ou la revendication 29, dans lequel quand les informations de l'état de DRM indiquent que le module de DRM (310) a commencé le traitement de clé, la génération de la variable de l'état de DRM comprend le changement de la variable de l'état d'opération normale à la variable de l'état de traitement de clé.

31. Procédé selon la revendication 28, 29 ou 30, dans lequel si les informations de l'état de DRM indiquent que l'opération de traitement de clé par le module de DRM (310) est réussie, la génération de la variable de l'état de DRM comprend le changement de la variable de l'état de traitement de clé à la variable de l'état d'opération normale, et si les informations de l'état de DRM indiquent que l'opération de traitement de clé par le module de DRM (310) a échoué, la génération de la variable d'état de DRM entraîne le changement de la variable de l'état de traitement de clé à la variable de l'état d'échec de traitement de clé.

32. Procédé selon l'une quelconque des revendications 17 à 31, comprenant en outre :
le stockage de la variable de l'état de DRM, dans lequel lors de la transmission de la variable de l'état de DRM, la variable de l'état de DRM stockée dans l'unité de stockage de variable d'état (350) est transmise au point de contrôle (360) en réponse à une demande de recherche de variable d'état par le point de contrôle (360).

33. Procédé selon la revendication 32, dans lequel la variable de l'état de DRM est transmise au point de contrôle (360) en réponse à une commande de get_protocol info du point de contrôle (360).
